Europäisches Patentamt

European Patent Office

Office européen des brevets

(19)

(11) **EP 0 820 699 A2**

(12) **EUROPEAN PATENT APPLICATION**

(43) Date of publication:
28.01.1998 Bulletin 1998/05

(51) Int. Cl.$^6$: **A23B 7/005**, A23B 7/01,
A23B 7/06, A23B 7/148

(21) Application number: 97202337.8

(22) Date of filing: 25.07.1997

(84) Designated Contracting States:
AT BE CH DE DK ES FI FR GB GR IE IT LI LU MC
NL PT SE

(30) Priority: 26.07.1996 NL 1003686

(71) Applicant:
Agrico Coöperatieve Handelsvereniging voor
Akkerbouwgewassen b.a.
8300 AB Emmeloord (NL)

(72) Inventor: Dalhuizen, Peter
8167 NC Oene (NL)

(74) Representative:
Hooiveld, Arjen Jan Winfried
Arnold & Siedsma,
P.O. Box 71720
1008 DE Amsterdam (NL)

(54) **Method for preserving tubers**

(57) A method for preserving tubers, preferably potatoes, wherein tubers are placed in a package and said package is at least partially filled with a gas, characterized in that the packaged tubers are subjected to a heat treatment such that at least substantially the entire interior of the packaged tubers has a temperature of 25 - 75 °C, preferably 40 - 60 °C, more in particular approximately 50 °C when large tubers are concerned, and that at least substantially the entire interior of the packaged tubers has a temperature of 45 - 85 °C, preferably 60 - 80 °C, in particular approximately 70 °C when small tubers or parts of tubers are concerned.

FIG. 2

EP 0 820 699 A2

## Description

The invention relates to a method for preserving tubers, wherein tubers are placed in a package and said package is at least partially filled with a gas. The invention is in particular aimed at the preservation of potatoes, irrespective of their dimensions (also small potatoes and mini potatoes, therefore), but also of parts thereof, such as potato halves, potato slices, potato chips, etc. The term tuber used herein not only refers to potatoes (or parts thereof), but also to carrots, white turnips (or parts thereof) and the like.

Such a method is generally known. With the known method potatoes are first peeled and then heated by blanching and/or exposure to microwaves. The term blanching is understood to mean the heating of potatoes by using water of steam at a temperature of 70 - 100 °C. Amylum present in the potatoes will become starchy as a result of said blanching and the reaction to the enzyme peroxidase will become negative in the direction of the core of the potatoes, to a distance of a few millimeters from the outside surface thereof. This latter effect implies that the enzyme peroxidase will remain active in the interior of the potatoes, that is, until approximately 4 mm from the outside surface thereof. The blanching step has a preserving effect. It is noted that when parts of potatoes and very small potatoes and minipotatoes are blanched, the enzyme peroxidase will be made inactive (almost) throughout the interior thereof. In order to increase the storage life of blanched potatoes, said potatoes are according to the known method packed in a transparent plastic package, whilst the package is filled with a mixture of nitrogen ($N_2$) and carbon dioxide ($CO_2$). Finally the potatoes packaged in this manner are cooled, whereby the carbon dioxide reacts in particular with the water ($H_2O$) present in the potatoes, which makes the environment in the package faintly acidic, which contributes to a small degree to a retarded growth of micro organisms which cause decay:

$$CO_2 + H_2O \rightarrow HCO_3^- + H^+$$

The drawback of the known method is the fact that (packaged) potatoes which have been treated in this manner have a storage life (cooled at 7 °C) of only about 10 days, counting from the day they were subjected to preservation treatment. This means that they can only be transported over a limited distance, that is over approximately 600 km from the place of preservation, and subsequently be sold, also in view of the time taken up by transport, distribution, sale and the like.

The object of the invention is to provide an elegant, that is, a simple and inexpensive method for increasing the storage life of tubers, and in order to accomplish that objective a method of the kind referred to in the introduction is according to the invention characterized in that the packaged tubers are subjected to a heat treatment. Preferably said heat treatment is carried out in such a manner that at least substantially the entire interior of the packaged tubers has a temperature of at least 25 - 80 °C, in particular 40 - 60 °C, more in particular approximately 50 °C when large tubers are concerned, and that at least substantially the entire interior of the packaged tubers has a temperature of at least 45 - 85 °C, preferably 60 - 80 °C, in particular approximately 70 °C when small tubers or parts of tubers are concerned.

It is noted that the term large tubers used herein refers to tubers having a maximum diameter of more than 50 - 60 mm, and that the term small tubers refers to tubers having a maximum diameter of less than 50 - 60 mm. Surprisingly the heating of a gas-filled package containing potatoes in this manner results in an average storage life of twenty days, counting from the time of their preservation treatment. When a gas-filled package containing potatoes is stored in a refrigerated environment after being heated, a storage life of more than forty days can be achieved, counting from the time of their preservation treatment.

The heat treatment takes place in particular with hermetically sealed/gas tight packages, in order to prevent subsequent contamination of tubers present therein. The invention is in particular based on the perception that in spite of the fact that a gas is an unsuitable medium for transferring heat, a suitable, rising temperature gradient (seen from the core to the outside surface of the tubers) is still built up in the interior thereof, in order to destroy any germs causing disease and decay, in particular near the outside surface of the tubers. The heat treatment has in particular a germicidal effect to a depth of 2 - 4 mm from the outside surface of the tubers.

The cores of large tubers thereby have a temperature as indicated in the aforesaid temperature ranges, or equals about 50 °C, and the cores of small tubers, such as small potatoes or mini potatoes, have a temperature as indicated in the aforesaid temperature ranges, or equals about 70 °C. This difference in core temperature is caused by the fact that the heat-absorbing capacity of a tuber depends on the volume and the surface area of the tuber. All this boils down to the fact that the outside surface of the tubers - irrespective of their size - is subjected to a temperature of at least 75 °C, preferably 80 - 90 °C, for a few minutes during the heat treatment, which results in the pasteurizing effect.

Heat transfer between tuber and heat medium takes place in particular when the outside surface of the tuber is in contact with the package. When the outside surface of the tuber is not in contact with the package (any more), the outside surface will cool down, because of a transfer of heat taking place to the core of the tuber. This effect is in particular stronger when large tubers are concerned, as a result of which they will have a lower core temperature after a sufficiently long heat treatment of the outside surface. Important is moreover that tubers preserved in this manner remain very fresh, this in contrast to pasteurized or sterilized tubers, whether or not they are contained in a vacuum package or for example in a water-filled glass jar. It will be apparent that this freshness is quite important at present. This aspect of freshness is furthermore enhanced because, as already said before, the tubers are not contained in a vacuum package or in a water-filled glass jar, but in a package filled with a neutral gas, which appears to be "ordinary" to for example the shopping public.

It is noted that the term storage life used herein relates to the organoleptic and external features remaining - substantially - unchanged. In particular the colour, degree of readiness to eat and the absence of a preservation odour may be considered in this context.

In one preferred embodiment of a method according to the invention the heat treatment is accompanied by rotation of the packaged tubers in a heat medium. Said rotation makes it possible to realise an even heating of the tubers present in the package, whereby the tubers are alternately moved into abutment against the package wall, which is in direct contact with the heat medium. It is preferred to use water vapour/steam as a heat medium.

In another preferred embodiment of a method according to the invention the gas comprises a mixture of a neutral gas (that is, a gas which hardly reacts with the tubers, if at all), preferably nitrogen ($N_2$) and a preserving gas, preferably carbon dioxide ($CO_2$). The advantage of nitrogen as an inert gas is that, unlike oxygen-containing air, it does not react with the tubers, and that in this light it also contributes to a longer storage life, therefore. As already noted before, the carbon dioxide reacts with the water present in the tubers, so that a faintly acidic environment is realised in the package, which contributes to a retarded growth of micro-organisms present therein, which cause decay. The addition of nitrogen ($N_2$) prevents the contact area between the tubers and the package from becoming too large after the gas volume present in the package has decreased as a result of the absorption of the carbon dioxide in the water of the tubers. The addition of nitrogen ($N_2$) prevents the build-up of an excessive sub-atmospheric pressure in the package, therefore. The mixing ratio depends on the fill factor of the package and on the total surface area of the tubers present in the package, it ranges from 50 - 85 per cent by volume preserving gas to 50 - 15 per cent by volume neutral gas.

It is preferred to pre-cool the package containing the tubers, which is filled with nitrogen and carbon dioxide, in particular at a temperature of 0 - 10 °C, preferably 2 - 7 °C, for a period of at least 4 hours, preferably more than 6 hours, prior to the heat treatment. Thus an ideal absorption of the carbon dioxide in the water of the potatoes is effected. When this "cooling step" is left out, this may lead to an excessive gas volume in the package at the time of the heat treatment, and thus to an insufficient contact area between the tubers and the package, because the carbon dioxide will not have been fully absorbed by that time. This effect may be prevented by using a different mixing ratio of the nitrogen and the oxygen in the package. The magnitude of the contact area between the tubers and the package during the heat treatment determines the magnitude of the heat transfer. With large tubers the required contact area is larger than with small tubers.

In another preferred embodiment of a method according to the invention the tubers are peeled or scraped prior to being blanched. In this manner a product which appeals to the public is provided.

The invention also relates to a package containing tubers, preferably potatoes, treated in accordance with a method according to the invention, and to a device for heating tubers present in a package by means of water and/or water vapour/steam.

The invention will be explained in more detail with reference to Figures shown in a drawing, wherein:

- Figure 1 shows a block diagram of a preferred embodiment of a method according to the invention; and

- Figure 2 shows a preferred embodiment of a device used in conjunction with the method illustrated in Figure 1.

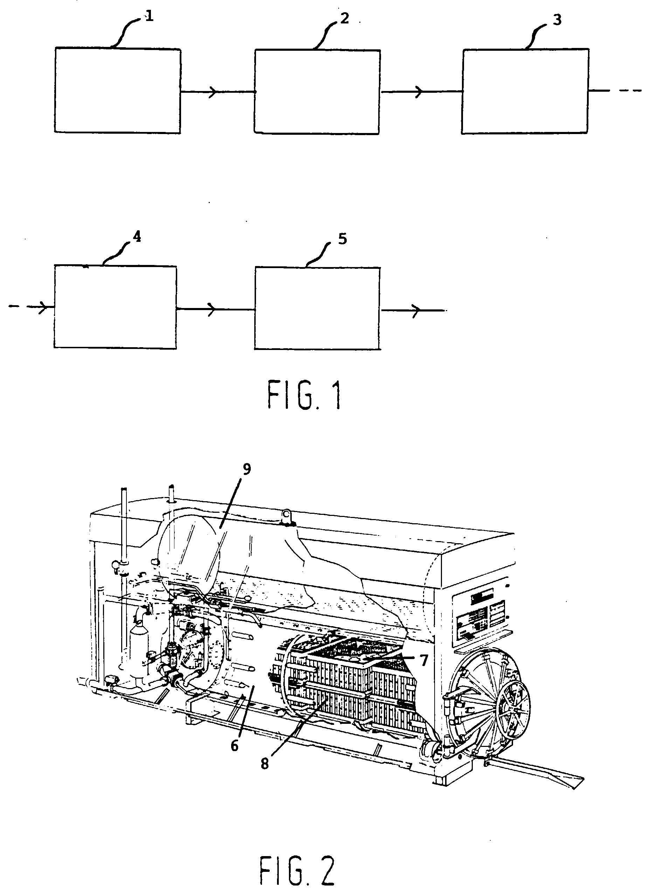

In step 1 of Figure 1 normal, large potatoes having a diameter of for example 60 mm are peeled and subsequently pre-heated by blanching. Said blanching takes place by subjecting potatoes to a temperature of 80 - 100 °C, in particular 82 - 95 °C, for a period of 5 - 15 minutes, preferably about 6 minutes (depending on the size of the potatoes). As a result of this the amylum present in the potatoes will become starchy, whilst the reaction to peroxidase will become negative to a depth of 3 - 4 mm from the outside surface of the potatoes, depending on the size of the potatoes.

In step 2 the blanched potatoes are placed in a gas tight package of plastic material, whilst the oxygen-containing air present therein is substituted for nitrogen and carbon dioxide in a mixing ratio which is adapted to the magnitude of the contact area of the potatoes and the fill ratio of the package, for example 80 per cent by volume $CO_2$ and 20 per cent by volume $N_2$. Preferably the package is at least partially transparent, so that the packaged potatoes will remain visible to the consumer.

Step 3 relates to the cooling of the gas-filled package containing potatoes for a period of 6 - 24 hours, whereby a cooling temperature of 2 - 7 °C is used.

Subsequently the cooled, gas-filled package is subjected to a heat treatment in step 4, as a result of which the temperature of the interior of the aforesaid large-size potatoes is raised to a level of at least 25 °C, preferably 50 °C, all through. With small tubers the temperature of the interior of the tubers must be at least 45 °C, preferably 70 °C. The temperature of the interior of the tuber depends on the size and the shape of the tuber. This will kill any germs causing disease and decay to a depth of 2 - 4 mm from the outside surface of the potatoes. All this leads to a storage life of approximately twenty days.

In step 5 the packaged potatoes may furthermore be cooled. Preferably the packaged potatoes are subjected to quick-cooling from their process temperature of 75 - 90 °C to a temperature of 2 - 7 °C. The cool-down time will thereby range from 20 to 30 minutes, for example. Said cooling may be carried out by adding cooling water to the pressure vessel or by immersing the packages in cold water/ice water or by sprinkling them therewith.

Experiments have shown that if the packaged potatoes are stored at a refrigeration temperature of 2 - 7 °C for forty days, they will still have a pleasant taste, colour and flavour at the end of that period, whereby the number of micro organisms causing decay will be low.

Figure 2 shows a pressure tank 6 used in step 4, in which gas-filled plastic packages 7 containing blanched potatoes are placed in cages 8. A heating-up tank 9 is visible above pressure tank 6, in which water is heated up under pressure to approximately 120 °C. After the water has been heated up, it is supplied to pressure tank 6 via a supply pipe for water, where it cools down under the influence of the cold packages containing potatoes. Said heating up of the water in heating-up tank 9 is carried out in order to have the packaged potatoes reach the process temperature as quickly as possible, so that the amount of bacterial growth will be reduced to a minimum.

Pressure tank 6 is provided with a supply pipe for water vapour/steam. As a result of said supplying of water vapour/steam the water in pressure tank 6 is heated up and maintained at the selected temperature. After the water in pressure tank 6 has reached a temperature of 90 - 111 °C, preferably 98 °C, cages 8 are rotated in pressure tank 6 filled with water and water vapour/steam at a rotational speed of about 4 revolutions per minute for a period of about 20 minutes. Inclusive of the heating-up of the water in pressure tank 6, the total process time amounts to approximately 30 - 40 minutes. Under the influence of the increasing temperature of the potatoes the carbon dioxide dissolved in the water of the potatoes will be partially released, as a result of which the gas volume in package 7 will increase. In order to prevent the contact area between the potatoes and package 7 from becoming too small, the pressure in pressure tank 6 is gradually increased from approximately 1.2 bar to 1.4 bar during the process. In order to be able to regulate the pressure in pressure tank 6 independently of the supply of steam, pressure tank 6 is provided with a separate supply pipe for compressed air.

Experiments have shown that in this manner the packaged potatoes are heated in a uniform manner; there is a rising temperature gradient from the core to the outside surface of the potatoes, the core temperature in the potatoes being at least 45 °C with small tubers and at least 25 °C with large tubers. After the packaged potatoes have been removed from pressure tank 6 and been cooled, the $CO_2$ present in the package will react with the water of the potatoes again. To the consumer it seems as if the packaged potatoes are "normally" packed in air, without refrigeration they will have an average storage life of 20 days, when refrigerated they will keep for an average 40 days.

## Claims

1. A method for preserving tubers, preferably potatoes, wherein tubers are placed in a package and said package is at least partially filled with a gas, characterized in that the packaged tubers are subjected to a heat treatment.

2. A method according to claim 1, characterized in that the tubers are pre-heated by being blanched and/or subjected to microwaves prior to being placed in the package.

3. A method according to claim 1 or 2, characterized in that the tubers are peeled or scraped prior to being pre-heated.

4. A method according to any one of the claims 1 - 3, characterized in that said heat treatment is carried out in such a manner that at least substantially the entire interior of the packaged tubers has a temperature of at least 25 - 75 °C, preferably 40 - 60 °C, in particular approximately 50 °C when large tubers are concerned, and that at least substantially the entire interior of the packaged tubers has a temperature of at least 45 - 85 °C, preferably 60 - 80 °C, in particular approximately 70 °C when small tubers or parts of tubers are concerned.

5. A method according to any one of the claims 1 - 4, characterized in that said pre-heating is accompanied by rotation of the packaged tubers in a heat medium.

6. A method according to claim 5, characterized in that said heat medium comprises water and/or water vapour/steam.

7. A method according to claim 5 or 6, characterized in that the pressure of the heat medium is increased during the heat treatment, preferably from 1.2 bar to 1.4 bar.

8. A method according to any one of the preceding claims 1 - 7, characterized in that said gas comprises a mixture of a neutral gas, preferably nitrogen ($N_2$), and a preserving gas, preferably carbon dioxide ($CO_2$).

9. A method according to claim 8, characterized in that the mixing ratio ranges from 50 - 85 per cent by volume preserving gas to 50 - 15 per cent by volume neutral gas.

10. A method according to any one of the preceding claims 1 - 9, characterized in that the packaged tubers are pre-cooled prior to being subjected to the heat treatment.

11. A method according to claim 10, characterized in that the packaged tubers are pre-cooled for a period of at least 4 hours, preferably more than 6 hours.

12. A method according to claim 10 or 11, characterized in that the packaged tubers are pre-cooled at a temperature of 0 - 10 °C, preferably 2 - 4 °C, prior to being subjected to the heat treatment.

13. A method according to any one of the preceding claims 1 - 12, characterized in that the packaged tubers are cooled down to a temperature of 2 - 7 °C within a period of 20 - 30 minutes after said heat treatment.

14. A package Containing tubers, preferably potatoes, treated in accordance with a method according to any one of the preceding claims 1 - 13.

15. A device for heating tubers present in a package by means of water and/or water vapour/steam, said device comprising a pressure vessel provided with supply pipes for water and for water vapour/steam, whereby said pressure vessel is furthermore provided with a supply pipe for compressed air.

FIG. 1

FIG. 2